# EUROPEAN PATENT APPLICATION

(11) **EP 3 339 453 A1**
(43) Date of publication of application: **27.06.2018**
(21) Application number: 16461581.7
(22) Date of filing: 23.12.2016
(51) Int. Cl.: C21D 1/18, C21D 1/50, C21D 9/00, C21D 1/25, C21D 1/58

(54) **THE HEAT TREATMENT SELECTION SYSTEM FOR FORGINGS, PARTICULARLY FORKED TYPE, OPTIMAL FOR FATIGUE STRENGTH**

(71) Applicant: Kuznia Jawor Spolka Akcyjna, 59-400 Jawor (PL)
(72) Inventor: NOWAK, Bart omiej, 52-200 Komorowice (PL); GRONOSTAJSKI, Zbigniew, 53-336 Wroc aw (PL); KACZY SKI, Pawe, 53-617 Wroc aw (PL); HAWRYLUK, Marek, 51-210 Wroc aw (PL)
(74) Representative: Górska, Anna

(57) **Abstract**

The invention relates to heat treatment selection system optimal for fatigue strength, including a method of its performing and equipment for realization of such method.

The heat treatment method of forgings, particularly yoke type, is characterized in that, the forging, particularly of yoke type, is subjected to austenitizing at 860 °C by 1 hour, followed by quenching in quenching oil at 45°C temperature, tempering at 650 °C by 1,5 hour, followed by air cooling.

The device for fatigue testing of forging, particularly of yoke type, comprising a drive directly connected with crankshaft by means of coupling, characterized in that the forcing lever (5) is mounted on the shaft double crank (4), that drives a forcing lever, whereas the forging (7) is fixed from one side to the forcing lever (5), while fastened on the other side.

## Description

The invention relates to heat treatment selection system optimal for fatigue strength, including a method of its performing and equipment for realization of such method, confirming correctness of forgings heat treatment, especially yoke ones.

Various types of heat treatment methods are commonly known and used, but very few of them is patented. Significant number of patent documents in the art relates to equipment for fatigue strength testing, but no publications have been found concerning a system comprising the treatment and control equipment dedicated for specific foundry product, as is the yoke forging.

From the PL201548 B1 Polish patent description an equipment is known for heat treatment in foundry process, wherein the items are produced in foundry machine having separated forming element with foundry space, intended for filling with molten foundry material, comprised in it. The foundry material may be, for example, plastic, light metal, metal or precious metal. The invention also relates to foundry machine, having separate device for treatment, but parameters of heat treatment processes have not been precisely specified.

The PL52981 B1 Polish patent document describes the heat treatment method of coil springs being made of cold rolled, thin stripes 0.3-0.5 mm thick and 5-15 mm wide made of carbon steels, containing 0.8-1.0% by weight carbon, providing them with high elastic properties, hardness within 72-75 HRA range and stability of shape and dimensions.

The PL187604 B1 Polish patent description discloses an equipment for structural material fatigue strength testing, in which a specimen is rigidly fixed by one end in the grip, connected with disk seated in the equipment body, while its second end is fixed in the sleeve-shaped holder, pivotably connected with a lever. The disk serves for setting the sample load type. The lever is connected with the disk by a tension member. The bearings of the disk are seated on flat springs, and exchangeable weight is placed on the disk. The disk is connected by a belt with a motor, which puts it in rotational motion. Movement of the lever, and hence the loading of the sample results from rotation of the disk with the weight, while the load amount depends on the disk RPM, mass of the weight and is distance from the disk center.

The patent documents indicated above relate separately to heat treatment methods and fatigue strength testing equipment, and have completely different heat treatment parameters.

For fatigue strength testing, hydraulic drive is most frequently used, because of high power, small overall dimensions, simplicity and control accuracy. Use of electric drive together with adequate transmission, connected with power screw, is another solution. The equipment for fatigue strength testing are equipped with sensors of applied force and displacement, while deformation of tested sample is frequently measured directly on it. Extensometer measurements are also frequently used.

Maintaining of deformation or stress set value had been usually done by means of control and adjustment, therefore the need arises to develop new device for testing forgings, that ensures such deformation maintaining by means of kinematic features of drive system. Selected course of load can be then easily applied and the test run adjusted in wide range.

Low-cycle fatigue tests are most frequently performed on versatile testing machines, in which adequate grips have been used, enabling transmission of tensile and compressive stress. Whereas high-cycle fatigue tests are performed by means of resonance pulsators; high testing frequency and low energy consumption are their advantages. The disadvantage of such type devices is their inapplicability for tested material hysteresis loop determination.

The purpose of the invention was to develop a selection system of heat treatment, optimal for fatigue strength, including method of its realization with determination of adequate parameters.

Furthermore it has been decided to provide new device for fatigue testing of forgings, particularly of yoke type, that enables both low-cycle and high-cycle fatigue testing, which usually was performed by means of two separate device types.

The object of the invention is the heat treatment method of forgings, particularly yoke type, consisting in that the forging is subjected to austenitizing at 860 °C by 1 hour, followed by quenching in quenching oil at 45°C temperature, tempering at 650 °C by 1.5 hour, followed by cooling the forging on free air.

Preferably the forgings are placed horizontally, in single layer with 20 to 30 mm spacing, in order to provide adequate cooling and heating rates.

The object of the invention is also the device for fatigue testing of forging, particularly of yoke type, comprising a drive directly connected to crankshaft by means of coupling, characterized in that the eccentric cam is mounted on the shaft double crank, that drives a forcing lever, whereby the forging is fixed from one side to the forcing lever, while fastened on the other side.

Preferably the drive has the form of electric motor.

Preferably the drive is connected to the crankshaft by means of bellows type or universal type coupling.

Preferably the double crank of the shaft is composed of central shaft and eccentric sleeve.

Preferably the forcing lever has a cut-out of oblong shape, inside which the double crank element of the crankshaft is fastened.

Preferably a forging is fastened to forcing lever by means of threaded mandrel.

The object of the invention is presented by example embodiments without limiting its scope, and in a drawing, in which:
fig. 1 presents the kinematic diagram of the fatigue testing device of forgings, particularly of yoke type,
fig. 2 presents construction of double-cranked shaft in cross-sectional view,

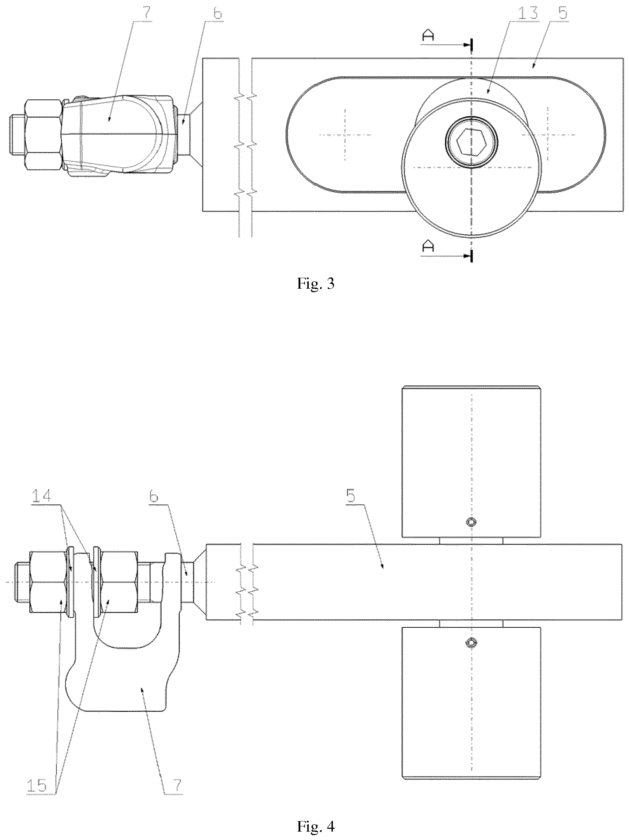

fig. 3 presents the side view of the service part of the fatigue testing device of yoke type forgings,
fig. 4 presents the top view of the service part of the fatigue testing device of yoke type forgings,
fig. 5 presents central shaft in a view and in a cross-section,
fig. 6 presents the service part of the fatigue testing device of yoke type forgings according to the invention, in axonometric view.

### Example 1

The object of the invention is the heat treatment method of forgings, particularly yoke type, consisting in that the forging is subjected to austenitizing at 860 °C by 1 hour, followed by quenching in quenching oil at 45°C temperature, tempering at 650 °C by 1,5 hour, followed by air cooling of the forging.

The heat treatment selection system for forgings, particularly yoke type, optimal for fatigue strength, comprising testing device for fatigue testing forging, particularly of yoke type, which has single speed general purpose electric motor 1 of 3 kW output, which is connected directly in series to assembled type crankshaft 4 by means of bellows type coupling 2. The crankshaft 4 is seated in bearings 3. Fastened on the double crank of shaft 4 is forcing lever 5, to which threaded mandrel 6 is fastened, passing through arms of yoke type forging 7. Torsion of forging 7 is forced by mandrel 6, rotating accordingly to forcing lever 5, while the base of forging 7 is rigidly fastened.

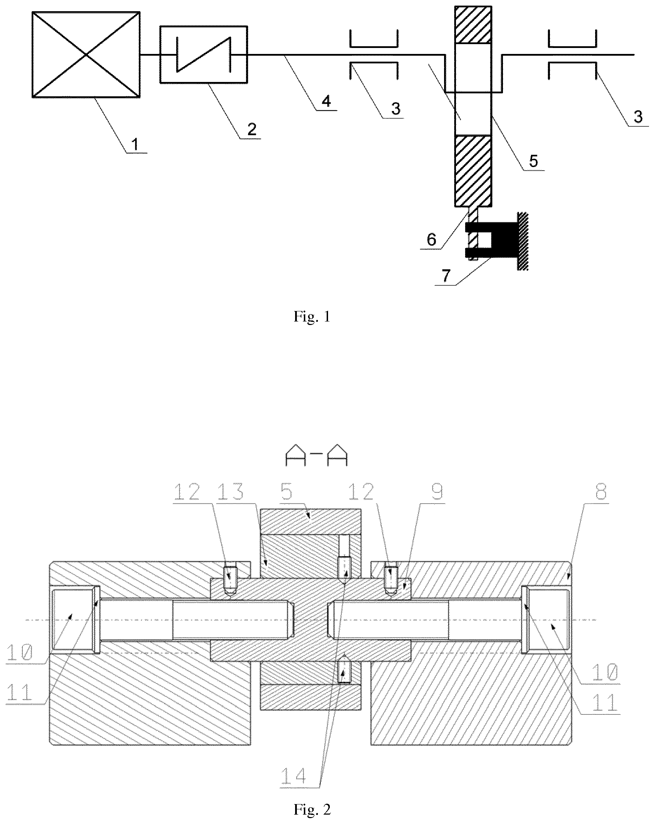

In fig. 2 there is shown construction of cranked shaft 4 in cross-sectional view, in which the cranked shaft 4 is composed of two outer shafts 8, rotating in bearings 3. Outer shafts 8 are connected with central shaft 9 by means of bolts 10 and washers 11. Possibility of central shaft 9 rotation in relation to outer shafts 8 was precluded by bolts 12. On central shaft 9 fitted, eccentric sleeve 13 is seated, which rotation in relation to central shaft 9 was precluded by means of bolts 14.

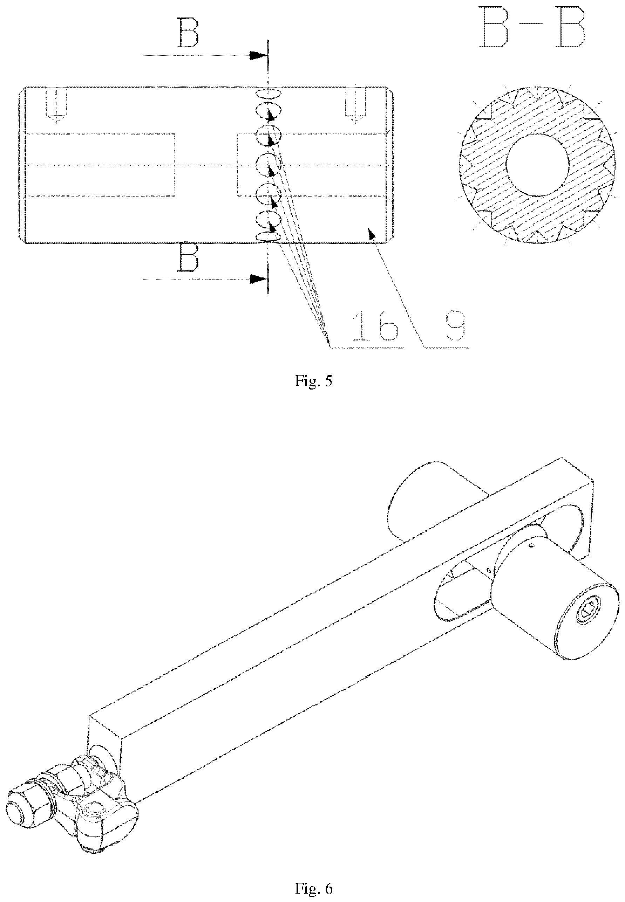

In fig. 5 there is shown construction of central shaft 9 in a view and in cross-section, in which bolts 14, precluding rotation of eccentric sleeve 13 in relation to central shaft 9, are received in conical recesses 16. Unscrewing the bolts 14 and screwing them in such, that they are received in another conical recesses 16, serves adjusting the eccentricity of shaft 4, hence it influences the value of torsional torque, that is applied to yoke type forging 7.

### Example 2

The device for testing forgings of yoke type as in Example 1, differing in that the bellows coupling 2 was replaced with Cardan joint coupling 2.

## Claims

1. The heat treatment method of forgings, particularly yoke type, **characterized in that**, the forging is subjected to austenitizing at 860 °C by 1 hour, followed by quenching in quenching oil at 45°C temperature, tempering at 650 °C by 1,5 hour, followed by air cooling of the forging.

2. The treatment method according to claim 1, **characterized in that**, the forgings are placed horizontally, in single layer with 20 to 30 mm spacing, in order to provide adequate cooling and heating rates.

3. The device for fatigue testing of forging, particularly of yoke type, comprising a drive directly connected with crankshaft by means of coupling, **characterized in that**, the forcing lever (5) is mounted on the shaft double crank (4), that drives a forcing lever, whereas the forging (7) is fixed from one side to the forcing lever (5), while fastened on the other side.

4. The device according to claim 3, **characterized in that**, the drive (1) has a form of electric motor (1).

5. The device according to claim 3, **characterized in that** the drive (1) is connected to shaft (4) by means of coupling (2) bellows type or universal type.

6. The device according to claim 3, **characterized in that**, the adjusting of shaft (4) double crank proceeds by means of eccentric sleeve (13), located on shaft (9).

7. The device according to claim 3, **characterized in that**, the forging (7) fastening to forcing lever (5) is done by means of rod (6) passing through arms of yoke type forging (7).
